# EUROPÄISCHE PATENTANMELDUNG

(11) **EP 2 317 764 A1**
(43) Veröffentlichungstag der Anmeldung: **04.05.2011**
(21) Anmeldenummer: 09174828.5
(22) Anmeldetag: 03.11.2009
(51) Int. Cl.: H04N 7/14

(54) **Verfahren und System zur Darbietung von Bilddaten**

(71) Anmelder: Deutsche Telekom AG, 53113 Bonn (DE)
(72) Erfinder: Brackmann, Ludwig, 53225, Bonn (DE)

(57) **Zusammenfassung**

Verfahren zur Darbietung von Bilddaten, insbesondere von Videokonferenz-Bilddaten, wobei eine Kamera Bilddaten eines ersten Teilnehmers aufzeichnet, wobei in den Bilddaten nach einem Gesicht und/oder nach Augen gesucht wird, wobei die Bilddaten des ersten Teilnehmers derart umgewandelt werden, dass der erste Teilnehmer als in Richtung der Kamera blickend dargestellt wird, wobei die umgewandelten Bilddaten des ersten Teilnehmers von einer zweiten Anzeigevorrichtung wiedergegeben werden, wobei die Bilddaten anhand von Referenzdaten umwandelt werden, die den in Richtung der Kamera blickenden ersten Teilnehmer repräsentieren und wobei zur Erstellung der Referenzdaten ein Signal ausgelöst wird, dass den ersten Teilnehmer veranlasst, in Richtung der Kamera zu blicken.

## Beschreibung

Die Anmeldung betrifft ein Verfahren zur Darbietung von Bilddaten, insbesondere von Videokonferenz-Bilddaten, wobei eine Kamera Bilddaten eines ersten Teilnehmers aufzeichnet, wobei in den Bilddaten nach einem Gesicht und/oder nach Augen gesucht wird, wobei die Bilddaten des in Richtung einer ersten Anzeigevorrichtung blickenden ersten Teilnehmers derart umgewandelt werden, dass der erste Teilnehmer als in Richtung der Kamera blickend dargestellt wird, und wobei die umgewandelten Bilddaten des ersten Teilnehmers von einer zweiten Anzeigevorrichtung wiedergegeben werden. Weiter bezieht sich die Anmeldung auf ein System zur Darbietung von Bilddaten.

Im Zuge der immer besseren Versorgung mit Breitbandanschlüssen und der Entwicklung moderner Kompressionsverfahren ist es möglich geworden, neben Sprachdaten auch Bilddaten in einer guten Qualität live an einen anderen Ort zu übermitteln. Seitdem erfreuen sich Telepräsenz-Anlagen mit Ton- und Bildübertragung zwischen zwei oder mehr Standorten einer immer größeren Beliebtheit. Hierzu zählt sowohl die eher dem privaten Rahmen zuzuordnende Bildtelephonie als auch die eher zu dem professionellen Bereich gehörende Videokonferenz.

Während der Bilddaten-Übertragung sind zumindest zwei an verschiedenen Standorten befindliche Teilnehmer über eine Datenleitung miteinander verbunden. Die jeweils zu übertragenden Bilder werden an einem ersten Standort von einer Kamera aufgenommen, über die Datenverbindung an einen anderen Standort gesendet und dort auf einem Bildschirm dargestellt. Gleichzeitig werden von dem anderen Standort Bilder übermittelt und auf dem Bildschirm am ersten Standort gezeigt.

Bei Bildtelephonie- und Videokonferenzsystemen, deren Kamera neben dem Bildschirm oder am Bildschirmrand positioniert ist, tritt während des Gesprächs mit den anderen Teilnehmern häufig ein merkliches Parallaxe-Problem auf. Üblicherweise blickt jeder Teilnehmer während des Gesprächs auf seinen Bildschirm, da ihm dort ein Bild oder eine Information des anderen Teilnehmers dargeboten wird. Der auf seinen Bildschirm blickende Teilnehmer schaut dabei an der ihn aufnehmenden Kamera vorbei und wird dem anderen Teilnehmer auf dessen Bildschirm entsprechend wegblickend dargestellt. Dieses aneinander vorbei Gucken ist irritierend und verhindert, durch einen vermeintlichen Augenkontakt eine persönliche Gesprächsatmosphäre aufkommen zu lassen.

Um das Parallaxen-Problem zu umgehen und einen direkten Blickkontakt zwischen den Teilnehmern zu simulieren sind verschiedenen Lösungen bekannt.

Eine dieser Lösungen beruht auf der Verwendung eines halbdurchlässigen Spiegels. Zwischen dem Bildschirm und dem Teilnehmer aufgestellt, lässt der halbdurchlässige Spiegel die auf dem Bildschirm dargestellte Information zum Teilnehmer durch. Das aufzunehmende Bild der in Richtung des Bildschirms blickenden Person wird hingegen reflektiert und auf eine Kamera gelenkt. Die von der Kamera aufgezeichneten Bilddaten zeigen so die direkt in die Kamera blickende Person.

Bei einer anderen Lösung ist in der Bildschirmfläche eine mittige Öffnung vorhanden, durch die eine Kamera die auf den Bildschirm blickende Person frontal aufzeichnet.

Weitere Lösungen verwenden statt einer zwei oder mehrere Kameras, die ein Bild der auf den Bildschirm blickenden Person aus jeweils unterschiedlicher Perspektive aufnehmen. Deren Aufnahmen werden zu einem Bild zusammengesetzt und derart umgewandelt, als hätte die auf dem Bildschirm abgebildete Person während der Aufnahme in die Kamera geschaut. Sie wird hierdurch aus dem sie darstellenden Bildschirm frontal heraus blickend dargestellt.

Aus der DE 195 39 048 B4 ist ein Videokonferenz-System bekannt, bei dem das von einer oberhalb des Bildschirms angebrachten Kamera aufgenommene Bild auf Augen abgesucht wird. Werden Augen detektiert, wird der Parallaxen-Winkel zwischen dem Bildschirm, der Kamera und den Augen ermittelt. Hierzu wird die Spiegelung einer ortsfesten Lichtquelle in der Pupille des Teilnehmers lokalisiert und die Position der Spiegelung in Bezug auf das Zentrum der Pupille gemessen. Die Parallaxe des aufgenommenen Bildes wird kompensiert und das veränderte Bild an ein anderes Videokonferenz-System übertragen.

Allen bekannten Lösungen ist gemeinsam, dass sie entweder kompliziert aufgebaut oder schwierig zu handhaben sind. Aufgabe der vorliegenden Anmeldung ist es ein Verfahren zur Darbietung von Bilddaten vorzuschlagen, dass eine Parallaxen-Korrektur des aufgenommenen Bildes auf besonders einfache Weise durchführt. Weiter ist es Aufgabe, ein ebensolches System vorzuschlagen.

Diese Aufgaben werden gelöst durch ein Verfahren nach Anspruch 1 und ein System nach Anspruch 8. Ein erfindungswesentlicher Grundgedanke des Verfahrens ist es, für die optimierte Darstellung eines Teilnehmers Referenzdaten zu erstellen, auf denen er in Richtung der Kamera blickt. Diese Referenzdaten werden genutzt, um die Aufnahme des auf den Bildschirm blickenden Teilnehmers in ein Bild umzuwandeln, auf dem er dargestellt ist, als würde er gerade in die Kamera blicken. Das Bild des auf den Bildschirm blickenden Teilnehmers wird somit gezielt verzerrt. Dabei ist das Verzerren nicht nur auf die Darstellung der Augen beschränkt, sondern kann auch auf andere Teile des Gesichts erweitert werden. Das Verzerren wird von einer Bildbearbeitungs-Software ausgeführt, die beispielsweise über Funktionen wie das Morphen verfügt. Derartige Programme sind hinlänglich bekannt.

Die umgewandelten Bilddaten werden an die zweite Anzeigevorrichtung übermittelt. Aufgrund der Umwandlung wird der erste Teilnehmer von der zweiten Anzeigevorrichtung als Person dargestellt, die direkt in die aufnehmende Kamera schaut. Ein die Darstellung des ersten Teilnehmers betrachtender zweiter Teilnehmer der Videokonferenz oder Bildtelephonie erhält so den Eindruck, als würde der erste Teilnehmer frontal aus dem Bildschirm heraus schauen und mit ihm einen Augenkontakt herstellen. Die Kommunikation zwischen den Teilnehmern erhält durch diesen Blickkontakt eine persönliche Note und ähnelt einem direkten Gespräch zwischen sich gegenüberstehenden und einander ansehenden Personen. Das gezielte Verzerren des ersten Teilnehmers führt somit nicht zu einer Entstellung seiner Person. Es stellt ihn vielmehr positiv als an der geführten Kommunikation interessiert und engagiert dar.

Die zum Verzerren genutzten Referenzdaten werden aufgezeichnet, wenn der erste Teilnehmer in Richtung der Kamera blickt. Um den ersten Teilnehmer zu veranlassen, in diese Richtung zu schauen, wird ihm ein Signal präsentiert. Dafür wird das Signal möglichst aus direkter Nähe der Kamera abgegeben. Das Signal ist sozusagen die Aufforderung an den ersten Teilnehmer, zur Kamera hin zu blicken. Die Aufforderung kann subtil erfolgen, beispielsweise indem der erste Teilnehmer durch das aus Richtung der Kamera kommende Signal intuitiv oder sogar unbewusst dazu veranlasst wird, kurz in die Kamera zu schauen. Durch das intuitive Hinschauen kann sich der erste Teilnehmer vollständig auf die Videokonferenz konzentrieren. Auf diese Weise wird er möglichst wenig gestört.

Die in dem Moment des in die Kamera Schauens aufgezeichneten Bilddaten des Teilnehmers werden der Bildbearbeitungs-Software als Referenzdaten zur Verfügung gestellt. Die für HD-Videokonferenzen oder 3D-HD-Video-Konferenzen genutzte Kamera-Technik zeichnet Bilddaten in einer so hohen Qualität auf, dass eine Detektion einzelner, wenn auch kleiner Körperteile keine Schwierigkeit bereitet. Nimmt die Kamera den Teilnehmer auf, während er in Richtung der Kamera schaut, detektiert eine Steuerung die Augen des Teilnehmers und erkennt deren Ausrichtung als Blick in die Kamera. Die dabei gewonnenen Bilddaten werden als Referenz für die Bildumwandlung aufgezeichnet. Hierzu ist es völlig ausreichend, wenn der Teilnehmer nur kurz in Richtung auf die Kamera hin schaut. Um Referenzdaten generieren zu können, ist es somit lediglich erforderlich, das Signal als kurzen Impuls zu geben.

Schaut der erste Teilnehmer nicht in die Kamera, beispielsweise wenn er auf seinem Bildschirm dargebotene Information betrachtet, detektiert die Steuerung die Augen des Teilnehmers als an der Kamera vorbeischauend. In diesem Fall wird die Steuerung ein Parallaxen-Problem erkennen. Die aufgenommenen Bilddaten werden daraufhin bearbeitet, wobei zumindest die Augen des Teilnehmers als in Richtung der Kamera schauend dargestellt werden. Grundsätzlich können also auch darüber hinaus gehende Bestandteile der Gesichtsoberfläche gemorpht werden. Beispielsweise kann der erste Teilnehmer auch als mit seinem Gesicht frontal in die Kamera schauend dargestellt werden.

Ebenso ist es möglich, den Umfang der Verzerrung vorzugeben, also den Bereich, in dem ein Bild des nicht auf den Bildschirm blickenden Teilnehmers noch umgewandelt wird. Es kann zwar durchaus sinnvoll sein, kurze seitliche Blicke der Person durch die Bildbearbeitung auszugleichen. Es ist jedoch nicht unbedingt erforderlich oder sogar kontraproduktiv, eine vollkommen in eine andere Richtung schauende Person als in die Kamera schauend darzustellen. Beispielsweise macht es keinen Sinn, einen sich in Richtung einer öffnenden Tür umdrehenden Teilnehmer weiterhin als auf den Bildschirm blickend darzustellen.

Die gewünschte Einstellung der jeweiligen Parameter kann per Vorgabe erfolgen oder durch die Steuerung, sozusagen als zentrale Intelligenz des Verfahrens, situationsbedingt durchgeführt werden.

In einem besonders einfachen Fall wird das Verfahren nur unidirektional durchgeführt. Beispielsweise bekommt ein Teilnehmer auf dem Bildschirm nicht einen anderen Teilnehmer, sondern eine Information wie eine Tabelle dargeboten, während sein umgewandeltes Bild an den anderen Teilnehmer übermittelt wird. Das erfindungsgemäße Verfahren ist jedoch nicht nur auf einen einzelnen Teilnehmer beschränkt, sondern kann für beliebig viele Teilnehmer an verschiedenen Orten durchgeführt werden. In diesem Fall werden den verschiedenen Teilnehmern jeweils Bilddaten eines oder mehrerer der anderen Teilnehmer übermittelt. Die Bilder der Teilnehmer werden dabei vorzugsweise über eine Split-Screen-Funktion oder auch als Bild-im-Bild auf dem Bildschirm eines Teilnehmers dargestellt. Die Bildbearbeitung der jeweils eigenen Bilddaten erfolgt dabei vor der Übermittlung dezentral am Standort jedes Teilnehmers. Das Verfahren kann aber auch bi- oder multidirektional durchgeführt werden. Die Bildbearbeitung der zu übermittelnden Bilddaten erfolgt dann vorzugsweise an zentraler Stelle.

In einer bevorzugten Ausführungsform wird das umgewandelte Bild eines Teilnehmers nicht nur an andere Teilnehmer übermittelt, sondern auch auf dem jeweils eigenen Bildschirm angezeigt. Der Teilnehmer sieht sich somit sein eigenes, umgewandeltes Bild und kann überprüfen, ob das Verfahren ordnungsgemäß funktioniert. Werden mehrere Teilnehmer vor derselben Kamera aufgenommen, kann die Parallaxen-Erkennung und die Bildanpassung auch für jede von der Software erkannte Person einzeln durchgeführt werden.

Vorzugsweise wird das Signal vor dem Aufbau oder direkt zu Beginn der Datenverbindung ausgelöst. Dann können die für die Bildbearbeitung erforderlichen Referenzdaten vor dem Aufbau oder direkt zu Beginn der Datenverbindung aufgezeichnet werden. Dies hat den Vorteil, dass auf der zweiten Anzeigevorrichtung von Anfang an Bilder des ersten Teilnehmers dargestellt werden, in denen er als in die Kamera schauend abgebildet ist.

In einer besonders bevorzugten Ausführungsform wird das Signal nicht in regelmäßiger Folge ausgelöst, sondern nur, wenn für die Umwandlung der Bilddaten neue Referenzdaten benötigt werden. Das ist beispielsweise der Fall, wenn sich die Position der aufgenommenen Person in bezug auf die Kamera verändert hat oder eine neuer Teilnehmer hinzugekommen ist und von der Kamera erkannt wird. Auf diese Weise wird gewährleistet, dass das Signal nie länger und/oder häufiger als wirklich erforderlich ausgelöst wird. Die hierfür erforderliche Bewertung wird von der Steuerung durchgeführt.

In einer weiteren besonders bevorzugten Ausführungsform ist das den Teilnehmer zum Blick in die Kamera veranlassende Signal ein Lichtsignal. Ein solches Lichtsignal kann gegeben werden, ohne den Ablauf einer Bildtelephonie oder Videokonferenz weiter zu beeinträchtigen. Insbesondere kann es für die Teilnehmer an den anderen Standorten unbemerkt gegeben werden. Vorzugsweise umfasst der Lichtsignalgeber eine oder mehrere LED.

In einer bevorzugten Ausführungsform ist der Signalgeber der Kamera zugeordnet. Dies hat den Vorteil, dass die Position der Kamera und die Richtung, aus der das Signal gegeben wird, übereinstimmen. Bei einem Blick in Richtung auf das Signal schaut der Teilnehmer somit direkt in die Kamera. Vorzugsweise weist die Kamera selbst den Signalgeber auf. Er kann aber auch in ihrer unmittelbaren Nähe positioniert sein, so dass eine vorhandene Kamera leicht für das Verfahren aufgerüstet werden kann.

Ist die Kamera in der unmittelbaren Nähe des Bildschirms positioniert, kann in einer alternativen bevorzugten Ausführungsform das Lichtsignal auf dem Bildschirm erzeugt werden. Zur Ausgabe des Lichtsignals wird der Randbereich der Bildschirmoberfläche genutzt, in dessen direkter Nähe sich die Position der Kamera befindet. Vorzugsweise wird das Lichtsignal als heller, kurz aufleuchtender Bildschirmbereich dargestellt. Der den Bildschirm betrachtende Teilnehmer wird bei Erscheinen des Lichtsignals im Randbereich des Bildschirms intuitiv in dessen Richtung blicken. Wesentlich für die Qualität der Umwandlung ist es, dass das Lichtsignal zumindest nahe einer Gerade angeordnet ist, die zwischen dem ersten Teilnehmer und der Kamera verläuft. Die hierbei aufgenommenen Referenzdaten entsprechen annähernd den Bilddaten eines direkt in die Kamera blickenden Teilnehmers.

## Patentansprüche

1. Verfahren zur Darbietung von Bilddaten, insbesondere von Videokonferenz-Bilddaten,
wobei eine Kamera Bilddaten eines ersten Teilnehmers aufzeichnet,
wobei in den Bilddaten nach einem Gesicht und/oder nach Augen gesucht wird,
wobei die Bilddaten des ersten Teilnehmers derart umgewandelt werden, dass der erste Teilnehmer als in Richtung der Kamera blickend dargestellt wird,
und wobei die umgewandelten Bilddaten des ersten Teilnehmers von einer zweiten Anzeigevorrichtung wiedergegeben werden,
**dadurch gekennzeichnet,**
**dass** die Bilddaten anhand von Referenzdaten umwandelt werden, die den in Richtung der Kamera blickenden ersten Teilnehmer repräsentieren und
**dass** zur Erstellung der Referenzdaten ein Signal ausgelöst wird, dass den ersten Teilnehmer veranlasst, in Richtung der Kamera zu blicken.

2. Verfahren nach Anspruch 1, **dadurch gekennzeichnet, dass** zur Erstellung der Referenzdaten ein Lichtsignal ausgelöst wird.

3. Verfahren nach Anspruch 1 oder 2, **dadurch gekennzeichnet, dass** die Referenzdaten zu Beginn der Verbindung zwischen der Kamera und der zweiten Anzeigevorrichtung aufgezeichnet werden.

4. Verfahren nach einem der Ansprüche 1 bis 3, **dadurch gekennzeichnet, dass** das Signal ausgelöst wird, wenn zur Umwandlung der Bilddaten neue Referenzdaten benötigt werden.

5. Verfahren nach einem der Ansprüche 1 bis 3, **dadurch gekennzeichnet, dass** das Signal periodisch ausgelöst wird.

6. Verfahren nach einem der vorangegangenen Ansprüche, **dadurch gekennzeichnet, dass** die Bilddaten mehrerer Teilnehmer umgewandelt werden.

7. Verfahren nach einem der vorangegangenen Ansprüche, **dadurch gekennzeichnet, dass** das Signal auf dem Bildschirm der ersten Anzeigevorrichtung in unmittelbarer Nähe zu der Kamera dargeboten wird.

8. System zur Darbietung von Bilddaten, insbesondere zur Durchführung des Verfahrens nach einem der Ansprüche 1-7,
umfassend eine Kamera zur Aufzeichnung der Bilddaten eines ersten Teilnehmers und eine erste Anzeigevorrichtung zur Darstellung von Informationen,
eine Steuereinheit zur Umwandlung der Bilddaten des ersten Teilnehmers in Bilddaten des in die Kamera blickenden ersten Teilnehmers,
und eine zweite Anzeigevorrichtung zur Darstellung des ersten Teilnehmers der Videokonferenz,
wobei die erste und die zweite Vorrichtung über eine Datenverbindung miteinander verbunden sind,
**gekennzeichnet durch**,
einen Signalgeber, der zumindest nahe einer Gerade angeordnet ist, die zwischen dem ersten Teilnehmer und der Kamera verläuft.

9. System nach Anspruch 8, **dadurch gekennzeichnet, dass** der Signalgeber an der Kamera angeordnet, insbesondere mit ihr verbunden ist.

10. System nach Anspruch 8 oder 9, **dadurch gekennzeichnet, dass** der Signalgeber eine oder mehrere LED umfasst.

11. System nach Anspruch 8, **dadurch gekennzeichnet, dass** der Signalgeber von der ersten Anzeigevorrichtung ausgebildet wird.
